# EUROPÄISCHE PATENTSCHRIFT

(11) **EP 1 391 354 B1**
(45) Veröffentlichungstag und Bekanntmachung des Hinweises auf die Patenterteilung: **14.06.2006**
(21) Anmeldenummer: 03017315.7
(22) Anmeldetag: 31.07.2003
(51) Int. Cl.: B60R 21/20, B60R 21/26

(54) **Airbagmodul**
Airbag module
Module de coussin gonflable

(30) Priorität: 17.08.2002 DE 10237727
(43) Veröffentlichungstag der Anmeldung: 25.02.2004
(73) Patentinhaber: Bayerische Motoren Werke Aktiengesellschaft, 80809 München (DE)
(72) Erfinder: Weiss, Olaf, 85402 Kranzberg (DE)

(56) Entgegenhaltungen:
- DE-A- 10 020 796
- DE-A- 19 947 262
- DE-U- 20 020 101
- US-A- 6 047 986

## Beschreibung

Die Erfindung bezieht sich auf ein Airbagmodul, wie es im Oberbegriff des Patentanspruchs 1 beschrieben ist. Des Weiteren ist Gegenstand der Erfindung ein Verfahren nach Anspruch 3 zum Einbau eines Airbagmoduls in ein Fahrzeug, insbesondere Kraftfahrzeug.

Airbagmodule der bekannten Art bestehen wenigstens aus den Teilelementen Luftsack und Gasgenerator mit seinem das Gasvolumen für das Aufblasen des Luftsacks erzeugenden Treibmittel. Weitere mechanische Teile, wie Gehäuseabschnitte, Halterungen usw. ergänzen in der Regel das Airbagmodul. Alle Teile des so aufgebauten Gesamtmoduls sind auf Grund gesetzlicher Forderungen fest miteinander verbunden und das Gesamtmodul darf nur in dieser Ausbildung transportiert werden. Es soll sichergestellt sein, dass bei einem ungewollten Zünden das Treibmittel rückstoßfrei abbrennt.

Aus dem gleichen Grund, nämlich dem ungewollten Zünden sind Höchstmengen beim Transport und bei der Lagerung der Airbagmodule vorgeschrieben.

Unabhängig davon wird bei Fehlermeldungen des im Fahrzeug montierten Airbagmoduls das Gesamtsystem ausgebaut und durch Zünden des Treibmittels unbrauchbar gemacht. Tatsächlich überwacht das bordeigene System aber lediglich die elektrischen Kontakte, über die das Zünden des Treibmittels eingeleitet wird. Das heißt, wird hier ein Fehler gemeldet, könnten der Luftsack und die weiteren mechanischen Teile noch in Ordnung sein und müssten nicht ausgebaut und zerstört werden.

Ein gattungsgemäßes Airbagmodul zeigt die US-A-6,047,986. Das Generatorgehäuse besteht aus zwei zusammengefügten Blechteilen und bildet zwei Kammern aus. In der ersten Kammer befindet sich der Luftsack, während in die zweite Kammer eine Gaserzeugungspatrone einführbar und am Generatorgehäuse festschraubbar ist.

Aufgabe der Erfindung ist es, ein gattungsgemäßes Airbagmodul so auszulegen, dass es problemlos transportiert, gelagert und ins Fahrzeug eingebaut und darüber hinaus kostengünstig repariert werden kann.

Die Aufgabe wird erfindungsgemäß mit den kennzeichnenden Merkmalen der Ansprüche 1 und 3 gelöst. Weitere Ausgestaltungen der Erfindung ergeben sich aus den Unteransprüchen.

Die Erfindungsieht als Generatorgehäuse einen Hohlzylinder vor, dessen eine Stirnseite mit dem Luftsack in Verbindung steht und dessen gegenüberliegende Stirnseite das Einbringen des Treibmittels in das Generatorgehäuse bei im Fahrzeug eingebautem Airbagmodul erlaubt. Durch diese Ausgestaltung kann das Treibmittel in das Generatorgehäuse eingebracht werden, nachdem das Airbagmodul bereits im Fahrzeug eingebaut ist. Das "noch nicht geladene" Airbagmodul lässt sich somit in beliebigen Mengen transportieren und lagern.

Darüber hinaus kann das einmal eingebrachte Treibmittel wieder aus dem Generatorgehäuse entfernt werden. Auf diese Weise werden im Reparaturfall erhebliche Kosten gespart, da bei ansonsten intaktem Airbagmodul lediglich das Treibmittel mit der Zündpille und die elektrischen Anschlüsse ersetzt werden müssen.

In einer weiteren bevorzugten Ausführung der Erfindung ist das Treibmittel auf einer Abschlussplatte angeordnet, die durch einen geeigneten, lösbaren Verschluss mit dem Generatorgehäuse verbindbar ist. Zweckmäßigerweise bildet ein Hohlzylinder das Generatorgehäuse, in den die Grundplatte an einer als Einbringöffnung für das Treibmittel vorgesehene Stirnseite eingeschraubt wird und so das Gehäuse verschließt.

Weitere vorteilhafte Ausgestaltungen der Erfindung ergeben sich aus der nachfolgenden Beschreibung eines vorteilhaften Ausführungsbeispiels anhand der dazugehörenden Zeichnung.

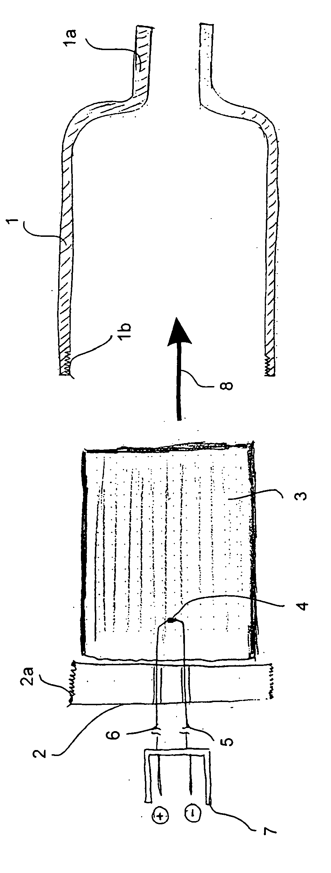

Die Zeichnung zeigt in einer **einzigen Figur** und in schematischer Weise die Teile eines Airbagmoduls, die für das Verständnis der Erfindung notwendig sind. Das Airbagmodul kann an einer beliebigen Stelle in einem Kraftfahrzeug verbaut sein, bspw. im Dachbereich.

Es ist ein Generatorgehäuse 1 in der Form eines Hohlzylinders angedeutet, dessen eine Stirnseite sich zu einem Gasführungskanal 1a verengt. Diesem Gasführungskanal ist ein nicht näher dargestellter Luftsack zugeordnet, der entweder direkt an ihm befestigt ist oder aber über weitere Rohrabschnitte von ihm versorgt wird. Wichtig ist nur, dass der Gasgenerator 1, der Luftsack und die gegebenenfalls weiteren Rohrabschnitte und Verankerungselemente eine fest miteinander verbundene, nicht lösbare Einheit bilden und in dieser Gesamtheit transportiert, gelagert und montiert werden. Die dem Gasführungskanal 1a gegenüberliegende Stirnseite des hohlzylindrischen Generatorgehäuses 1 ist offen, weist jedoch an der Innenwandung des Zylindermantels ein Innengewinde 1b auf.

Eine Abschlussplatte 2 mit einem zu dem Innengewinde 1b passenden Außengewinde 2a trägt ein explosives Treibmittel 3. Diese Treibmittel 3 kann in jeder bekannten Form dargestellt sein; es muss lediglich die Bedingung des "rückstoßfreien Verbrennens" erfüllen. In der Nähe der Abschlussplatte 2 sitzt im Treibmittel 3 eine Zündpille 4, zu der elektrische Leitungen 5 und 6 durch die Abschlussplatte 2 hindurchführen. Auf der anderen Seite sind die Leitungen 5 und 6 mit einem Stecker 7 verbunden für den Anschluss an das Bordnetz des Fahrzeuges.

Beim Einbau des Airbagmoduls in das Kraftfahrzeug wird zunächst das Generatorgehäuse und die mit ihm verbunden Teile, also insbesondere der Luftsack, das ihn in der Regel umgebende Gehäuse mit Befestigungsabschnitten usw. montiert. Sodann wird das Treibmittel 3 in das Gehäuse eingeschoben - angedeutet durch einen Pfeil 8. Die mit dem Treibmittel 3 verbundene Grundplatte 2 wird mit dem Generatorgehäuse verschraubt und der Stecker 7 mit dem Bordnetz verbunden. Damit ist das Airbagmodul funktionsbereit. In einem Crashfall wird über die elektrischen Leitungen 5 und 6 die Zündpille 4 aktiviert und das Treibmittel 3 gezündet. Das von ihm erzeugte Gasvolumen wird über den Gasführungskanal 1a zum Luftsack geleitet, der sich bestimmungsgemäß entfaltet.

Sollte die Bordelektrik ohne Auslösen des Airbags eine Fehlfunktion melden, ist lediglich die Abschlussplatte 2 vom Generatorgehäuse 1 abzuschrauben, zusammen mit dem Treibmittel 3 zu entfernen und durch eine neue Einheit zu ersetzen.

## Patentansprüche

1. Airbagmodul, das wenigstens aus den miteinander verbundenen Elementen Luftsack und Generatorgehäuse (1) besteht und als solche Einheit in ein Fahrzeug einbaubar ist, und bei dem ein explosives Treibmittel (3), das beim Zünden des Airbags ein Gasvolumen für das Aufblasen des Luftsacks erzeugt, in das Generatorgehäuse (1) einbringbar ist, **dadurch gekennzeichnet, dass** ein Hohlzylinder das Generatorgehäuse (1) bildet, dessen eine Stirnseite mit dem Luftsack in Verbindung steht und dessen gegenüberliegende Stirnseite das Einbringen des Treibmittels (3) in das Generatorgehäuse bei eingebautem Airbagmodul erlaubt.

2. Airbagmodul nach Anspruch 1, **dadurch gekennzeichnet, dass** die Stirnseite des Generatorgehäuses (1) zum Einbringen des Treibmittels (3) ein Innengewinde (1b) aufweist und dass das Treibmittel (3) auf einer Abschlussplatte (2) mit einem in das Innengewinde (1b) einschraubbaren Außengewinde (2a) angeordnet ist.

3. Verfahren zum Montieren eines Airbagmoduls in ein Fahrzeug, insbesondere Kraftfahrzeug, wobei das Airbagmodul wenigstens aus den miteinander verbundenen Elementen Luftsack und Generatorgehäuse besteht und ein im Generatorgehäuse vorgesehenes explosives Treibmittel beim Zünden des Airbags ein Gasvolumen für das Aufblasen des Luftsacks erzeugt, **dadurch gekennzeichnet, dass** die unlösbare Einheit aus Luftsack und Generatorgehäuse (1) in das Fahrzeug eingebaut und sodann das Generatorgehäuse (1) mit dem Treibmittel (3) befüllt wird.

## Claims

1. An airbag module comprising at least elements of an airbag connected to a generator casing (1) and installable as a unit in a vehicle, wherein an explosive propellant (3), which generates a volume of gas for inflating the airbag when ignited, is insertable into the generator casing (1), **characterised in that** the generator casing (1) is a hollow cylinder having one end connected to the airbag whereas the other end is for inserting the propellant (3) into the generator casing when the airbag module is installed.

2. An airbag module according to claim 1, **characterised in that** the end of the generator casing (1) for installing the propellant (3) is formed with an internal screwthread (1b) and the propellant (3) is disposed on an end plate (2) with an external screwthread (2a) for screwing into the internal thread (1 b).

3. A method of fitting an airbag module into a vehicle, especially a motor vehicle, wherein the airbag module comprises at least elements of the airbag connected to a generator casing, and an explosive propellant provided in the generator casing generates a volume of gas for inflating the airbag when ignited, **characterised in that** the permanently-joined unit comprising the airbag and generator casing (1) is installed in the vehicle, after which the generator casing (1) is filled with the propellant (3).

## Revendications

1. Module de coussin gonflable comprenant au moins les éléments coussin d'air et boîtier du générateur (1) reliés l'un à l'autre et pouvant être installés en tant qu'unité dans un véhicule, et pouvant être inséré dans le boîtier de générateur (1), un agent gonflant (3) explosif génère un volume de gaz pour gonfler le coussin d'air lors de l'allumage du coussin gonflable,
**caractérisé en ce que**
le boîtier de générateur (1) est formé par un cylindre creux dont la face frontale est en communication avec le coussin d'air et dont la face frontale opposée permet l'insertion de l'agent gonflant (3) lorsque le module de coussin gonflable est installé.

2. Module de coussin gonflable selon la revendication 1,
**caractérisé en ce que**
la face frontale du boîtier du générateur (1), pour l'insertion de l'agent gonflant (3), présente un filetage femelle (1b), et l'agent gonflant (3) est disposé sur une plaque terminale (2) munie d'un filetage mâle (2a) pouvant être vissé dans le filetage femelle (1b).

3. Procédé de montage d'un module de coussin gonflable dans un véhicule, en particulier un véhicule automobile, selon lequel
le module de coussin gonflable comprend au moins les éléments coussin d'air et boîtier du générateur reliés l'un à l'autre, et
un agent gonflant explosif prévu dans le boîtier du générateur génère un volume de gaz pour gonfler le coussin d'air lors de l'allumage du coussin gonflable,
**caractérisé en ce que**
l'unité non amovible composée du coussin d'air et du boîtier du générateur (1) est installée dans le véhicule puis le boîtier de générateur (1) est rempli avec l'agent gonflant (3).
